# EUROPEAN PATENT APPLICATION

(11) **EP 2 320 305 A1**
(43) Date of publication of application: **11.05.2011**
(21) Application number: 09809831.2
(22) Date of filing: 20.08.2009
(51) Int. Cl.: G06F 3/041, G02F 1/133, G02F 1/1333

(54) **DISPLAY DEVICE**

(30) Priority: 25.08.2008 JP 2008215540
(71) Applicant: Sharp Kabushiki Kaisha, Osaka-shi, Osaka 545-8522 (JP)
(72) Inventor: IMAI, Masahiro, Osaka-shi, Osaka 545-8522 (JP)
(74) Representative: Goddar, Heinz J.
(86) International application number: PCT/JP2009/064573
(87) International publication number: WO 2010/024179

(57) **Abstract**

Provided is a display device that, even if noise has been generated due to a signal for image display being applied to a display unit, can acquire correct position information free of the influence of noise from a touch panel unit. The display device includes a display unit having a plurality of electrodes for image display, a display control unit (22) that controls image display performed by the display unit by applying, to the electrodes of the display unit, electrode driving signals whose voltage levels change with a predetermined cycle, a touch panel unit that detects an input position from the outside, and a touch panel control unit (21) that acquires a position detection signal by applying a scan signal to the touch panel unit. The touch panel control unit (21) applies the scan signal three or more times in a cycle in which the voltage levels of the electrode driving signals change and compares the obtained position detection signals corresponding to the scan signals, determines position information indicated by two or more of the position detection signals that indicate the same result as being correct position information, and outputs the determined position information as a position signal.

## Description

### Technical Field

The present invention relates to a display device including a touch panel function and having a display unit that displays an image and a touch panel unit that detects a position of input from the outside, and in particular relates to a display device that can obtain a correct position signal from the touch panel unit even if influence is exerted by a switch in the voltage level of an electrode driving signal for image display by the display unit.

### Background Art

In recent years, the prevalence of personal digital assistants (PDAs), handheld computers, mobile gaming devices, and the like has been accompanied by the widespread use of a display device with a touch panel as a display device including a touch panel function that, due to superimposing a touch panel as an input unit on a display panel such as a liquid crystal panel, enables input operations to be performed via a touch panel employing a display image.

In a liquid crystal display device used as such a display device with a touch panel, a transparent touch panel is stacked on the image display face of a liquid crystal panel, and images displayed on the liquid crystal panel are visible through the touch panel. If the outer face of the touch panel, that is to say, the surface on the side where the display image of the liquid crystal panel is observed, is pressed by an input pen or the like, the position that was pressed can be detected, and the content of the input can be caused to be reflected in the control of a device such as a PDA that is using the display device with a touch panel.

However, in a liquid crystal display device with a touch panel, when electrode driving signals for performing image display are applied to various types of electrodes in the liquid crystal panel, noise is generated due to liquid crystal panel itself acting as a capacitor, and this noise becomes superimposed with a position detection signal from the touch panel that is arranged adjacent to the liquid crystal panel, thus having negative influence such as causing an incorrect position to be detected.

As a method for avoiding this kind of influence from noise when operating the liquid crystal panel, a liquid crystal display device with a touch panel has been proposed in which an AC electrification signal to be applied to a liquid crystal panel by a liquid crystal panel driving IC is received, and a scan signal is applied to the touch panel at a timing delayed from the rising edge of the AC electrification signal by a certain time (see JP H04-371916A).

### Disclosure of Invention

In the above-described conventional liquid crystal display device with a touch panel, an attempt to avoid a situation in which noise from the liquid crystal panel influences a position detection signal from the touch panel is made by shifting the timing of change in the AC electrification signal for image display, which is the cause of noise, and the timing of application of the scan signal for detecting position information from the touch panel.

However, the noise generated by a display panel such as a liquid crystal panel is not generated at only the timing of the switch in the AC electrification signal, but rather noise that negatively influences the position detection signal from the touch panel is also generated at the timing of change in the voltage levels of the electrode driving signals applied to the various types of electrodes for image display that are provided in the display panel. For example, in the case of a liquid crystal panel, each time there is a change in the voltage levels of the electrode driving signals applied to the electrodes necessary for image display, namely a common electrode, gate electrodes, and source electrodes, noise is generated at the timing of the change in the voltage levels at these electrodes. Also, the timing of the change in voltage level is not the same for all of these electrodes. Accordingly, with a method in which the timing of the application of the AC electrification signal to be applied to the display panel is provided with a predetermined time delay in the scanning of the touch panel, such as the above-described conventional method, the timing of the scanning of the touch panel cannot be reliably shifted from the timing at which noise is generated in the display panel, and it is not possible to always acquire a correct position detection signal.

In view of this, an object of the present invention is to, in light of the above-described problems, provide a display device that can acquire correct position information free of the influence of noise from a touch panel unit, even in a case where noise has been generated due to the application of an electrode driving signal for image display to a display unit that displays an image.

In order to solve the above-described problems, a display device of the present invention includes: a display unit having a plurality of electrodes for image display; a display control unit that controls image display performed by the display unit by applying, to the plurality of electrodes of the display unit, electrode driving signals whose voltage levels change with a predetermined cycle; a touch panel unit that detects an input position from the outside; and a touch panel control unit that acquires a position detection signal by applying a scan signal to the touch panel unit, wherein the touch panel control unit applies the scan signal three or more times in a cycle in which the voltage levels of the electrode driving signals change and compares the obtained position detection signals corresponding to the scan signals, determines position information indicated by two or more of the position detection signals that indicate the same result as being correct position information, and outputs the determined position information as a position signal.

According to the present invention, the touch panel control unit can determine a correct position detection signal that has not been influenced by noise generated during operation of the display unit, and output it as the position signal, thus enabling obtaining a display device that enables accurate input operations to be performed with use of the touch panel unit.

### Brief Description of Drawings

[FIG. 1] FIG. 1 is an exploded perspective diagram showing a configuration of a liquid crystal display device with a touch panel according to an embodiment of the present invention.
[FIG. 2] FIG. 2 is a block diagram showing a circuit configuration of the liquid crystal display device with a touch panel according to the embodiment of the present invention.
[FIG. 3] FIG. 3 is a diagram showing an example of the timing of change in the voltage levels of electrode driving signals applied to electrodes for image display in the liquid crystal display device with a touch panel according to the embodiment of the present invention.
[FIG. 4] FIG. 4 is a diagram showing an example of the timing of change in the voltage levels of electrode driving signals for image display, and the timing of generation of a scan signal in the liquid crystal display device with a touch panel according to the embodiment of the present invention.
[FIG. 5] FIG. 5 is a diagram showing another example of the timing of change in the voltage levels of electrode driving signals for image display, and the timing of generation of a scan signal in the liquid crystal display device with a touch panel according to the embodiment of the present invention.
[FIG. 6] FIG. 6 is a diagram showing a procedure of position detection information determination performed by a touch panel control unit in the liquid crystal display device with a touch panel according to the embodiment of the present invention.
[FIG. 7] FIG. 7 is a diagram illustrating targets of the position detection information determination performed by the touch panel control unit in the liquid crystal display device with a touch panel according to the embodiment of the present invention.
[FIG. 8] FIG. 8 is a diagram showing an example of the timing of generation of a scan signal in the liquid crystal display device with a touch panel according to the embodiment of the present invention.

### Description of the Invention

A display device according to the present invention includes: a display unit having a plurality of electrodes for image display; a display control unit that controls image display performed by the display unit by applying, to the plurality of electrodes of the display unit, electrode driving signals whose voltage levels change with a predetermined cycle; a touch panel unit that detects an input position from the outside; and a touch panel control unit that acquires a position detection signal by applying a scan signal to the touch panel unit, wherein the touch panel control unit applies the scan signal three or more times in a cycle in which the voltage levels of the electrode driving signals change and compares the obtained position detection signals corresponding to the scan signals, determines position information indicated by two or more of the position detection signals that indicate the same result as being correct position information, and outputs the determined position information as a position signal.

According to this configuration, position detection signals obtained with respect to three or more scan signals are compared, and two or more position detection signals indicating the same result are considered to be correct position detection signals, thus enabling determining a correct position detection signal even if an incorrect position detection signal influenced by noise is included among the detected position detection signals. For this reason, even if noise has been generated due to a change in the voltage levels of the electrode driving signals for image display that are applied to the plurality of electrodes in the display unit, it is possible to accurately acquire correct position information from position detection signals free of the influence of noise, and output the acquired position information from the touch panel unit as a position signal.

Furthermore, it is preferable that the display control unit causes timings of change in the voltage levels of the electrode driving signals applied to the plurality of electrodes of the display unit to be the same timing. Doing this enables lowering the possibility that noise will be mixed in with a position detection signal, thus making it possible to determine and output an accurate position detection signal.

Also, the display device of the present invention can have a configuration in which the display device has a display panel in which the display unit that performs image display is formed, and a touch panel in which the touch panel unit that detects input information is formed, and the touch panel is arranged adjacent to a display face of the display panel.

Also, it is preferable that the display panel is a liquid crystal panel in which a liquid crystal layer is sandwiched between two opposing substrates.

Below is a description of an embodiment of the present invention with reference to the drawings.

Note that in the following description of an embodiment of the present invention, a configuration is described in which a display device according to the present invention has a display panel in which a display unit is formed and a touch panel in which a touch panel unit that detects an input position is formed, and the touch panel is arranged adjacent to the display face of the display panel. More specifically, an example is shown of a configuration in the case of implementation as a liquid crystal display device with a touch panel that employs a liquid crystal panel as the display panel and is used for image display in a PDA or the like.

However, the following description does not limit the display device according to the present invention. Besides the case where the display panel is a liquid crystal panel, the present invention is applicable to display devices including various types of display panels, such as an organic or inorganic EL display, or a field emission-type cold cathode display device. Also, including the case where the display panel is a liquid crystal panel, the application thereof is not limited to a mobile device such as a PDA, but rather can be used as various types of stationary display devices with a touch panel that include a touch panel as an input means, such as a cash dispenser or a display terminal of an image description system in a museum.

Note that for the sake of convenience in the description, the drawings that are referred to below show simplifications of, among the constituent members of the embodiment of the present invention, only relevant members that are necessary for describing the present invention. Accordingly, the display device according to the present invention can include arbitrary constituent members that are not shown in the drawings that are referred to. Also, regarding the dimensions of the members in the drawings, the dimensions of the actual constituent members, the ratios of the dimensions of the members, and the like are not shown faithfully.

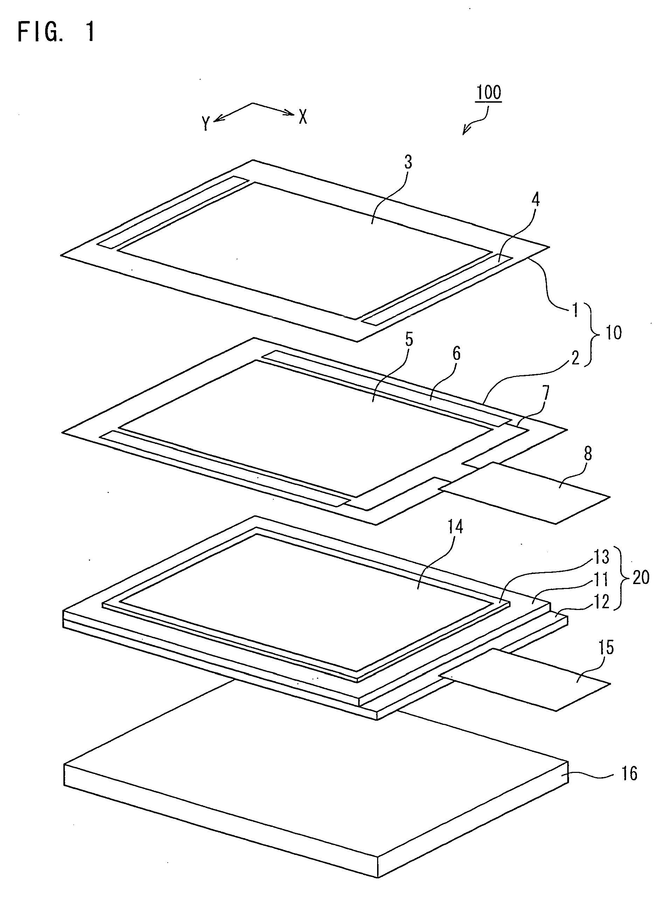

FIG.1 is an exploded perspective diagram showing an overall configuration of a liquid crystal display device with a touch panel, which is a display device with a touch panel according to an embodiment of the present invention.

A liquid crystal display device with a touch panel 100 of the present embodiment is roughly configured by a touch panel 10 including a touch panel unit for receiving an input of data, a liquid crystal panel 20 that is a display panel in which a display unit that displays an image is formed, and a backlight 16 that irradiates illumination light for the display of an image by the liquid crystal panel 20. The touch panel 10 is arranged on the side of the liquid crystal panel 20 where an image is observed.

The touch panel 10 of the liquid crystal display device with a touch panel 100 of the present embodiment is, for example, called a resistive film-type of touch panel that is formed by attaching together, with use of a sealing member (not shown), a flexible front substrate 1 formed from a plastic film such as polycarbonate (PC) and a flexible back substrate 2 likewise formed from a plastic film. Note that a spacer (not shown) is arranged between the front substrate 1 and the back substrate 2 in order to maintain a gap between the two substrates.

The inner surface of the front substrate 1, that is to say, the surface opposing the back substrate 2, has a front substrate electrode 3 formed from ITO or the like in a region that overlaps with a display region 14 of the liquid crystal panel 20 where images are displayed. The region where this front substrate electrode 3 is provided is an input region of the touch panel. Also, a pair of X electrodes 4 made from a low-resistance material such as silver paste are arranged on respective sides of the front substrate electrode 3 with respect to the X direction, that is to say, the left-right direction of the display region 14 of the liquid crystal panel 20.

Similarly to the front substrate 1, the inner surface of the back substrate 2, that is to say, the surface opposing the front substrate 1, has formed thereon a back substrate electrode 5 formed from ITO or the like in a region that overlaps with the display region 14 of the liquid crystal panel 20, and a pair ofY electrodes 6 made from a low-resistance material such as silver paste are arranged on respective sides of the back substrate electrode 5 with respect to the Y direction, that is to say, the up-down direction of the display region 14 of the liquid crystal panel 20. Also, connection electrodes (not shown) that are connected to the X electrodes 4 of the front substrate 1 are formed on the back substrate 2, and the output of the connection electrodes as well as output lines 7 of the Y electrodes 6 are connected to a flexible substrate 8.

The flexible substrate 8 exchanges scan signals to be input to the touch panel 10 and position detection signals output from the touch panel 10 with an external substrate (not shown) in which a touch panel control unit is formed.

More specifically, by applying a scan signal to the touch panel 10 via the flexible substrate 8, firstly the front substrate electrode 3 is caused to generate a voltage distribution in the X direction with a predetermined electric field gradient, and the X coordinate of a position that was pressed by a pressing means (not shown) such as a touch pen is detected by a detecting means (not shown). An output signal from the detecting means is transmitted by the flexible substrate 8 to the touch panel control unit via an output terminal (not shown) on the back substrate 2. Subsequently, the back substrate electrode 5 is also caused to generate a voltage distribution in the Y direction with a predetermined electric field gradient, and the Y coordinate of the pressed position is detected by a detecting means (not shown). An output signal from the detecting means in this case as well is transmitted to the touch panel control unit via the flexible substrate 8. The touch panel control unit can specify the thus-obtained X coordinate and Y coordinate of the position on the touch panel 10 that was pressed by a pressing means such as a touch pen.

In the liquid crystal panel 20, a common substrate 11 made from glass and a panel substrate 12 likewise made from glass are arranged with a predetermined gap therebetween, and a liquid crystal layer (not shown) is sandwiched between the common substrate 11 and the panel substrate 12.

In order to perform image display by controlling transmitted light in combination with the liquid crystal layer, a pair of polarizing plates 13 are respectively arranged on the outward faces of the common substrate 11 and the panel substrate 12, in a state in which the polarization angles thereof are mutually different by a predetermined angle. Note that in FIG. 1, only the polarizing plate 13 on the front face of the common substrate 11 is visible, and the polarizing plate on the back face of the panel substrate 12 is hidden.

Color filters are formed on the inner surface of the common substrate 11 in correspondence with pixels in order to display color images, and furthermore a common electrode that applies a predetermined voltage to the liquid crystal layer is formed on the inner surface of the common substrate 11.

Pixel electrodes are arranged in a matrix forming a plurality of rows and a plurality of columns on the inner surface of the panel substrate 12, and image display is performed by adjusting the potential between the pixel electrodes and the common electrode of the common substrate 11, thus changing the orientational state of the liquid crystal layer. Accordingly, the region of the panel substrate 12 where the pixel electrodes are formed is the display region 14 of the liquid crystal panel 20.

Formed in the display region 14 are a plurality of gate lines arranged in the row direction of the pixel electrodes, a plurality of source lines arranged in the column direction, and furthermore TFTs that are arranged in the vicinity of intersections between the orthogonal gate lines and source lines and are respectively connected to the pixel electrodes. By sequentially applying a gate voltage to the gate lines, the TFTs, which are switching elements, are turned on and selected row-by-row, and furthermore voltages necessary for image display are applied to the pixel electrodes belonging to the selected row via the source lines. Note that a depiction of the internal structures of the common substrate 11 and the panel substrate 12 has been omitted.

The panel substrate 12 has a somewhat larger surface area than that of the common substrate 11, and as shown in FIG. 1, the surface of the panel substrate 12 is exposed in the portion of the liquid crystal panel 20 on the right side in the figure. In this region where the surface is exposed, lead lines (not shown) that extend out from the gate lines and source lines formed in the display region are provided, and the lead lines are connected to a flexible substrate 15, which is connected to the panel substrate. The flexible substrate 15 is connected to an external substrate (not shown) on which a display control unit is formed, and various types of signals necessary for image display and voltages for causing circuit elements to operate are applied by the display control unit to the panel substrate 12 of the liquid crystal panel 20 via the flexible substrate 15.

Note that there are cases where COG (Chip On Glass) technology is employed to mount semiconductor elements for driving the liquid crystal panel 20 in the exposed region of the panel substrate 12, and cases in which TCP (Tape Carrier Package) technology is employed to mount semiconductor elements for driving the liquid crystal panel 20 and circuit elements such as capacitors on the flexible substrate 15.

A backlight 16 that irradiates illumination light necessary for the display of images by the liquid crystal panel 20 is arranged on the back face of the liquid crystal panel 20. Although not shown in detail in FIG.1, the backlight 16 of the liquid crystal display device with a touch panel 100 of the present embodiment is, for example, a side light-type or edge light-type backlight, and is configured from a planar light guiding body and a light source such as a cold cathode fluorescent tube or light emitting diode provided on the lateral face of the light guiding body. Illumination light from the light source that has been incident on the lateral face of the light guiding body is diffused and propagated by being repeatedly reflected inside the light guiding body, and is irradiated as uniform light from the main face of the light guiding body on the side opposing the liquid crystal panel 20.

Note that the backlight 16 of the liquid crystal display device 100 of the present invention is not limited to the above-described side light-type backlight, but rather can be a so-called direct-type backlight in which light sources are planarly arranged on the back face of the liquid crystal panel 20 so as to irradiate light toward the liquid crystal panel 20, and illumination light from the light sources is irradiated onto the liquid crystal panel via an optical sheet such as a light converging sheet or a diffusing sheet. Also, the light source is not limited to being a cold cathode fluorescent tube or a light emitting diode, but rather can be various types of light sources such as a hot cathode fluorescent tube or an EL emitter.

Furthermore, the liquid crystal panel 20 is not limited to a so-called transmissive or semi-transmissive panel in which illumination light from the backlight 16 is used in image display, but rather image display can be performed using a reflective liquid crystal panel 20 that employs external light that has entered through the common substrate 11 and been reflected by a reflection electrode formed on the panel substrate 12, and the backlight 16 is not necessary in this case.

The back substrate 2 of the touch panel 10 is stacked on the polarizing plate 13 arranged on the common substrate 11 of the liquid crystal panel 20, and is adhered thereon by an adhesive or the like.

Also, the backlight 16 and the liquid crystal panel 20 with the touch panel 10 stacked thereon are housed inside a structure member (not shown) called a bezel that is shaped as a frame having a bottom. There are also cases where the liquid crystal display device with a touch panel has a modular configuration in which fixed to the back face of this bezel are, for example, an external substrate that is connected to via the flexible substrate 8 and has formed thereon the control circuitry of the touch panel control unit that drives the touch panel 10 so as to generate a position detection signal that is the output of the touch panel 10, and an external substrate that is connected to via the flexible substrate 15 and has formed thereon the display control unit that controls images displayed by the liquid crystal panel 20.

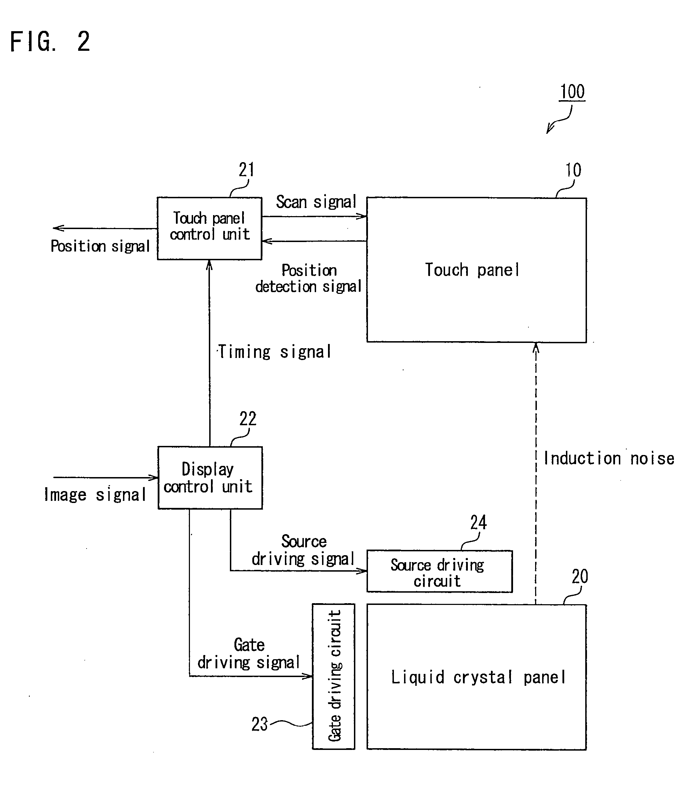

Next is a description of a main flow of signal processing in the liquid crystal display device with a touch panel 100 with reference to FIG. 2, which is a block diagram showing a rough circuit configuration of the liquid crystal display device with a touch panel 100 according to the present embodiment.

As shown in FIG. 2, in the liquid crystal display device with a touch panel 100 of the present embodiment, an image signal to be displayed by the liquid crystal panel 20 is input to a display control unit 22. Based on the image signal that was input, the display control unit 22 generates a gate driving signal and a source driving signal that are necessary for image display performed by the liquid crystal panel 20.

The gate driving signal generated by the display control unit 22 is applied to a gate driving circuit 23, and the gate lines of the liquid crystal panel 20 that are connected to the gate driving circuit 23 are sequentially selected at predetermined times. Also, the source driving signal generated by the display control unit 22 is applied to a source driving circuit 24, and the source driving circuit 24 sequentially supplies, via the source lines, a potential necessary for image display to the pixel electrodes connected to the selected gate lines.

The gate driving signal and source driving signal for image display in such a liquid crystal panel 20 are supplied to the gate electrodes and source electrodes respectively at scan times that are determined according to electrode driving signals whose voltage levels change. When the signal level of an electrode driving signal changes, the liquid crystal panel 20, in which electrodes are arranged in opposition and sandwich a liquid crystal layer, functions as a capacitor and generates induction noise, and the induction noise is transmitted to the touch panel 10 adhered to the surface of the liquid crystal panel 20.

In order to generate the above-described gate driving signal and source driving signal that are output for image display performed by the liquid crystal panel 20, the display control unit 22 acquires a vertical synchronization signal, a horizontal synchronization signal, a clock signal, and the like as control signals for image display performed based on the input image signal. The display control unit 22 outputs, to the touch panel control unit 21, one or more of these types of control signals as a timing signal to be a reference for controlling the operation timing of the touch panel 10.

The touch panel control unit 21 determines the timing of acquisition of a position detection signal from the touch panel 10 based on a timing signal that has been input from the display control unit 22. The touch panel control unit 21 applies a scan signal to the touch panel 10 in accordance with the determined timing for acquisition of a position detection signal.

In accordance with the timing at which the scan signal was applied, the touch panel 10 detects coordinates on the touch panel 10 that have been received as an instruction via an input means such as a touch pen, and outputs the detected coordinates to the touch panel control unit 21 as a position detection signal.

The touch panel control unit 21 generates the scan signal three or more times in succession at a predetermined interval, during one cycle of change in the voltage levels of the electrode driving signals applied by the display control unit 22 for image display to be performed by the liquid crystal panel 20. Position detection signals obtained from the touch panel 10 with respect to the scan signals are compared, and two or more position detection signals indicating the same result are determined from among the three or more obtained position detection signals. The position information detection result of these two or more position detection signals indicating the same result is output as the correct position signal. Note that a specific method for comparing obtained position detection signals that is performed by the touch panel control unit 21 will be described later.

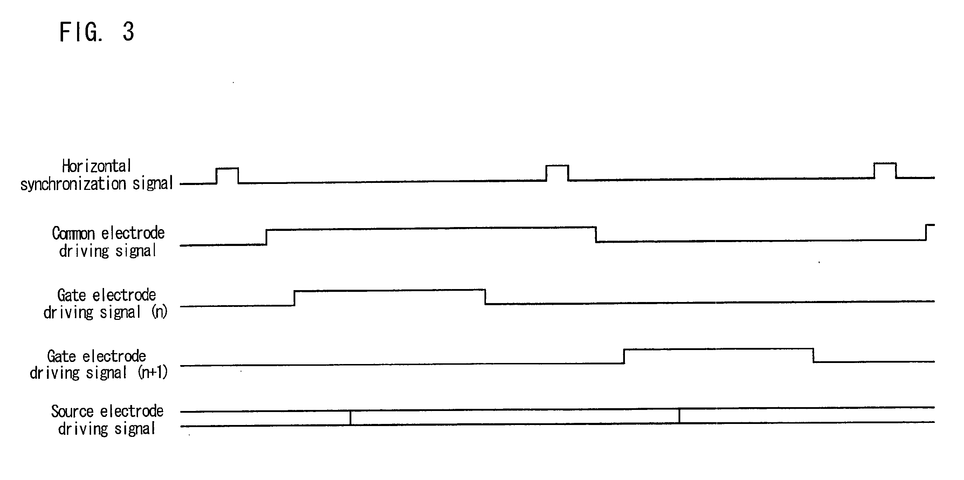

FIG. 3 is an illustrative diagram showing the timing of change in the voltage levels of electrode driving signals applied to electrodes for image display in the liquid crystal panel 20 of the present embodiment.

As shown in FIG. 3, a so-called inversion driving method, in which the direction of the electric field applied to the liquid crystal layer is inverted, is employed in the liquid crystal panel 20 according to the present embodiment, and therefore the voltage level of the common electrode driving signal applied to the common electrode changes with the same cycle as the horizontal synchronization signal. The range of change in the voltage level of the common electrode driving signal can be set to, for example, 5 V Note that the voltage level can be caused to change between -1 V and +4 V as a result of performing adjustment to prevent flickering.

The gate electrode driving signal is sequentially applied to a different gate electrode in each horizontal synchronization period. In order to indicate this, FIG. 3 shows change in the voltage level of a gate electrode driving signal n that is applied to an n-th gate electrode, and a gate electrode driving signal n+1 that is applied to an (n+1)-th gate electrode. The potential of a gate electrode is positive for a certain period while selected, and is negative for the remainder of the period. Specifically, the positive potential can be set to 15 V, and the negative potential can be set to -10 V

Likewise to the common electrode driving signal, the voltage level of the signal voltage of the source electrode driving signal changes with the same cycle as the horizontal synchronization signal. Although the voltage level is shown with use of two values for the sake of convenience in FIG. 3, the low voltage level and high voltage level of the common electrode driving signal each have the same number of voltage levels as the number of display tones. As one example of the voltage level range, the low voltage level is 0 V, and the high voltage level is, for example, 5 V Note that in consideration of driving circuit characteristics and the like, the high voltage level is often set in the approximate range of 4 V to 7 V

Note that although FIG. 3 shows an example in which the voltage levels of the common electrode driving signal, the gate electrode driving signal, and the source electrode driving signal are switched at phases that are sequentially shifted by the same interval from the timing of the application of the horizontal synchronization signal, this is merely an example of driving timing, and this is not intended to stipulate the driving timing of the liquid crystal display device with a touch panel of the present embodiment.

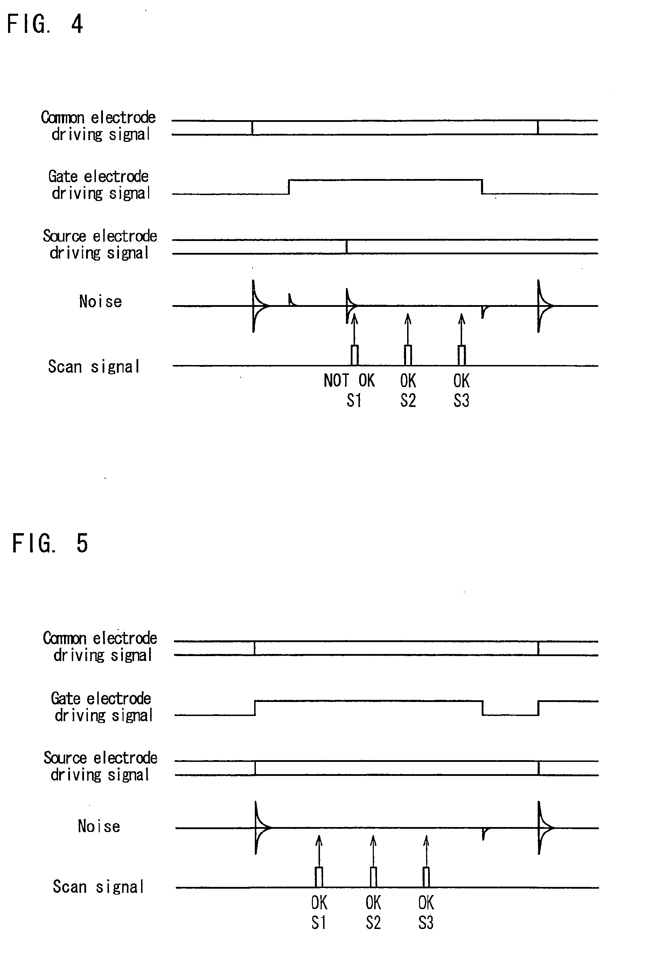

FIG. 4 is an illustrative diagram showing the timing of generation of induction noise transmitted to the touch panel 10, and the timing of application of a scan signal for acquiring a position detection signal from the touch panel, when image display is being performed by applying voltages to the electrodes of the liquid crystal panel 20 in accordance with the driving timing shown in FIG. 3.

Similarly to FIG. 3, FIG. 4 also shows the voltage levels of electrode driving signals that are applied to the common electrode, the gate electrodes, and the source electrodes. As shown in FIG. 3 as well, the timings of the change in the voltage levels of the electrodes have been sequentially phase-shifted.

As shown in FIG. 4, noise in the touch panel is generated at times when there is a change in the voltage levels of the electrode driving signals applied to the common electrode, the gate electrodes, and the source electrodes. Note that the magnitude of the noise transmitted to the touch panel changes depending on the size of the potential difference of the voltages applied to the electrodes and whether or not the electrodes are driven by inversion driving.

Here, assuming that the scan signal is applied to the touch panel three times at the timings of S1, S2, and S3 in the lowest level in FIG. 4, the first scan signal S1 substantially overlaps with the timing of change in the electrode driving signal applied to the source electrode, and therefore influence is exerted by the noise generated due to the change in the driving voltage level of the source electrode. For this reason, there is a high possibility that the position detection signal detected in correspondence with this first scan signal S1 does not indicate correct position information. However, the timings at which the second scan signal S2 and the third scan signal S3 are applied are shifted away from all of the timings of change in the voltage levels of the electrode driving signals applied to the electrodes of the liquid crystal panel 20, and therefore these signals do not overlap with noise. Accordingly, the position detection signals acquired in correspondence with these two scan signals S2 and S3 can be thought to indicate accurate information regarding a position on the touch panel 10.

At this time, by appropriately setting the interval at which the scan signal is applied, the position detection signals obtained in correspondence with the scan signal S2 and the scan signal S3 indicate the same result. Accordingly, by comparing the position detection signals obtained by applying the three scan signals S1, S2, and S3, it is possible to determine that the position information data indicated by the two position detection signals indicating the same result show correct information regarding a position on the touch panel.

FIG. 5 shows the timing of change in the voltage levels of electrode driving signals applied to the electrodes for image display performed by the liquid crystal panel 20, according to an example of a case different from the cases shown in FIGS. 3 and 4. Note that this figure is viewed in the same manner as FIG. 4.

FIG. 5 shows an example of the case where the start timings of change in the voltage levels of the electrode driving signals applied to the common electrode, the gate electrodes, and the source electrodes are all the same timing, as opposed to having somewhat shifted phases in the examples shown in FIGS. 3 and 4. In this case, the common electrode driving timing, which had the same cycle as the horizontal synchronization signal, matches the source electrode driving timing and matches the driving timing at which the voltage level of the gate electrode changes from negative to positive, and is slightly shifted from only the driving timing at which the voltage level of the gate electrode changes from positive to negative. Accordingly, noise is generated in the touch panel 10 at two timings, namely the timing of simultaneous change in the voltage levels of the electrode driving signals applied to the common electrode, the gate electrodes, and the source electrodes, and the timing at which the voltage level of the gate electrode driving signal changes from positive to negative.

Now consider the case where the three scan signals S1, S2, and S3 are applied in accordance with the timing shown in FIG. 5, in the case where the voltages applied to the electrodes of the liquid crystal panel 20 change in accordance with the timings described above. In this case, the times at which the scan signal is applied are all different from the times at which noise is generated, and therefore the position detection signals obtained from the touch panel 10 in correspondence with the scan signals can all be thought to be correct signals that are free of the influence of noise. Accordingly, in the case shown in FIG. 5, the results of the three obtained position detection signals are the same.

In display panels for performing image display, including the liquid crystal panel 20 described in the present embodiment, a vertical synchronization signal and a horizontal synchronization signal are generally used as reference signals for image display In particular, the horizontal synchronization signal, which has a higher frequency rate than that of the vertical synchronization signal, is treated as a reference signal for image display, and therefore by causing the voltage levels of the electrode driving signals applied to the electrodes to change in accordance with the same timing as in the case shown in FIG. 5, it is possible to reduce the number of times that noise that influences the touch panel is generated, and acquire position detection signals from the touch panel in a more favorable condition.

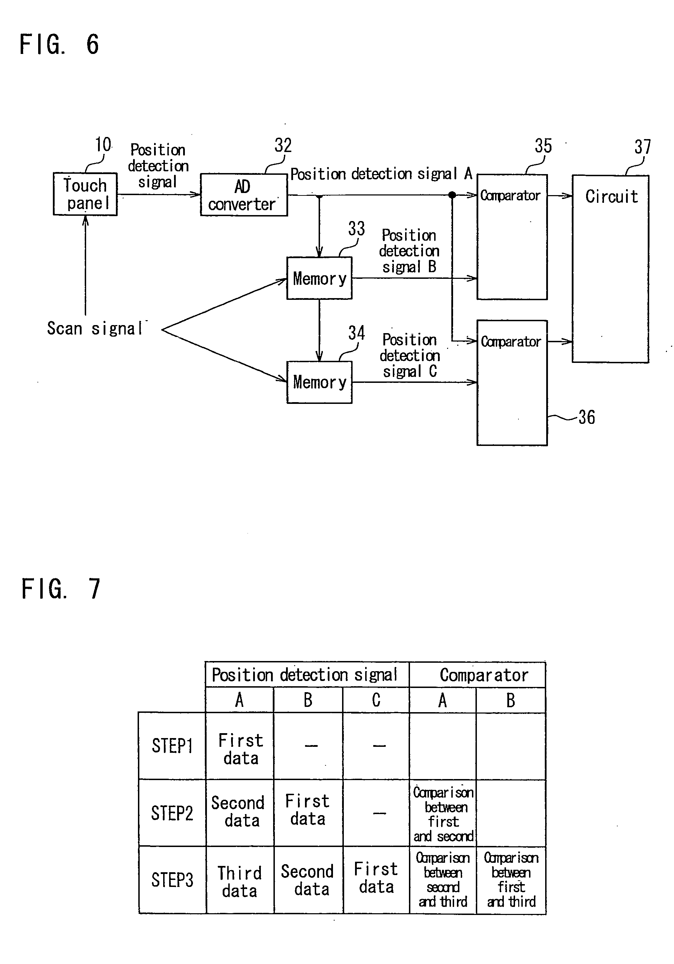

Next is a description of a specific example of a method of comparing acquired position detection signals and determining correct signals, which is performed in the touch panel control unit 21, with reference to FIGS. 6 and 7. FIG. 6 is a block diagram showing a circuit configuration for the determination of position detection signals performed by the touch panel control unit 21 in the liquid crystal display device with a touch panel 100 according to the present embodiment, and FIG. 7 shows targets of the comparison and determination of position detection signals performed by the touch panel control unit 21, organized in the three steps STEP1 to STEP3.

As shown in FIG. 6, firstly, the first scan signal is applied to the touch panel 10. This is the first STEP1.

In STEP1, the first position detection signal is output from the touch panel 10 in correspondence with the first scan signal. The output position detection signal is converted into digital data by anAD converter 32. At this time, a position detection signal A, which is the output of the AD converter 32, is data corresponding to the first scan signal as shown in FIG. 7.

Next, in STEP2, the second scan signal is applied to the touch panel 10. The position detection signals obtained from the touch panel 10 in correspondence with the timing of the generation and application of this scan signal are sequentially transferred to a memory 33 and a memory 34. For this reason, as shown in FIG. 7 as well, the signal obtained by conversion into a digital signal by the AD converter 32 in STEP2 is data obtained in correspondence with the second scan signal, the data that was detected in STEP1 and obtained in correspondence with the first scan signal is transferred to the first memory 33, and a position detection signal B becomes the data obtained in correspondence with the first scan signal.

Next, a comparer 35 compares the position detection signal A and the position detection signal B. Assuming that the output of the comparer is "H" if the compared signals are the same, the comparer 35 outputs "H" if the position detection signal A and the position detection signal B are the same signal, and outputs "L" if the position detection signal A and the position detection signal B are not the same.

Next, in STEP3, the third scan signal is applied to the touch panel 10. The position detection signal A, which has been obtained by conversion of the position detection signal obtained from the touch panel 10 into digital data by the AD converter 32, becomes the third detection data. Since the position detection signals are sequentially transferred to the memories at the same time as the third scan signal is applied, the second detection data is transferred to the memory 33 and becomes the position detection signal B, and the first detection data is transferred from the memory 33 to the memory 34 and becomes a position detection signal C.

The output of the comparer 35, which compares the position detection signal A and the position detection signal B, is "H" if the third detection data and the second detection data are the same. Also, a comparer 36, which compares the position detection signal A and the position detection signal C, compares the first detection data and the third detection data, and outputs "H" if they are the same.

An OR circuit 37 that outputs a logical OR of the output of the comparer 35 and the comparer 36 is provided, and therefore if the output of the OR circuit 37 is "H", it can be seen that the position detection signal A, that is to say, the detection data obtained in correspondence with the third scan signal, is the same as at least either the first detection data or the second detection data, or in other words, the position detection signal A is correct position information data that does not include noise.

Note that the match/mismatch determination performed by the comparer 35 and the comparer 36 shown in FIG. 6 may be a determination made on all bits of the output obtained by the conversion performed by the AD converter 32, or a number of least significant bits can be considered to be detection errors and ignored.

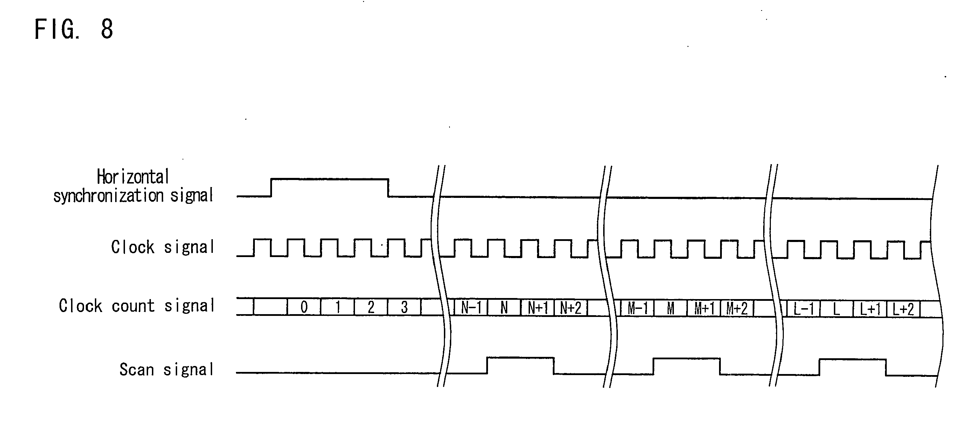

Next, FIG. 8 is a timing diagram showing the generation of the scan signal in the touch panel control unit 21.

In the example shown in FIG. 8, the scan signal is generated in synchronization with a clock count signal obtained by counting a clock signal used for image display. Doing this enables generating a plurality of scan signals at a predetermined interval, in a state of being associated with the horizontal synchronization signal, which is a reference for image display As described above, the signals that are applied to the display panel for image display and become noise in the position detection signal in the touch panel are generated in association with the horizontal synchronization signal for image display. For this reason, by causing the scan signal applied to the touch panel to be generated using the horizontal synchronization signal as a reference likewise to the signals applied for image display, it is possible to limit the influence of noise exerted on position detection signals obtained from the touch panel, and applying an innovation to the timing of generation of the scan signal enables obtaining more accurate position detection signals.

Also, a scan clock signal is the signal having the highest frequency among the signals generated based on a video signal in the display control unit 22, and therefore by measuring the timing of application of the scan signal to the touch panel 10 based on this scan clock signal, it is possible to handle even the case where there is high-speed movement in the position of information input via a touch pen or the like on the touch panel 10.

Note that in the above-described embodiment, a description has been given of the case of applying the scan signal to the touch panel 10 three times. This is because normally, when position detection signals corresponding to three scan signals are compared, two or more of the position detection signals are the same, and correct position detection information is obtained. However, there may be cases where two or more of the same position information is not obtained when three scan signals are applied. In such a case, two or more pieces of correct position detection information having the same value can be obtained by applying three or more scan signals and performing comparison and determination on a combination of position information pieces obtained in correspondence with the three or more scan signals.

Also, although the above-described embodiment shows an example in which the same time interval is used in the application of the scan clock signal using the clock counter signal that is based on the scan clock signal, the present invention is not limited to this, and the interval of the three scan signals or the time interval at which a further-added auxiliary scan signal is applied are not necessarily determined as being the same time interval.

Furthermore, in the above-described embodiment, an example is described in which the horizontal synchronization signal for image display performed by the display panel is used as a reference for the timing of application of the scan signal. This is because doing this enables more effectively separating the timing of application of the scan signal and the timing of change in the polarity of the voltages for image display performed by the display panel, which is the cause of noise in the position detection signals. However, the timing of application of the scan signal is not limited to using the above-described horizontal synchronization signal as a reference, and the timing of application is to be appropriately selected in accordance with the speed of the timing of switching in image display performed by the display panel, the speed of change in the coordinates of position information on the touch panel that are to be acquired, and the like.

For example, even if image display is performed in the display panel using the horizontal synchronization signal and the vertical synchronization signal, besides the case where signals for image display are written in conformity with the timing of the horizontal synchronization signal at the same time for all corresponding pixels, there are cases where, for example, signals are sequentially written to the pixels in succession. In such a case, rather than using the cycle of the horizontal synchronization signal as a reference, the timing for generating the three or more scan signals applied to the touch panel is set appropriately in accordance with the timing at which there is a possibility of noise being generated. As one specific example, it can be thought to be preferable to perform setting such that the touch panel scan signal is generated three or more times in the timing period during which the voltage levels of the electrode driving signals applied to the display panel change.

Also, although a so-called resistance film-type touch panel, in which a touched position is detected based on a potential gradient between an X electrode and Y electrode pair, is described as the touch panel in the above-described embodiment, the type of touch panel that can be used in the display device with a touch panel of the present invention is not limited to this. This is because even with, for example, a touch panel in which a touched position is detected using a photosensor, induction noise is generated due to a change in the voltage levels of electrode driving signals applied to the display panel when signals are transmitted in the touch panel, and there are cases where this induction noise becomes superimposed with the position detection signals from the touch panel. Accordingly, applying the present invention enables obtaining correct position information from the touch panel in display devices with a touch panel that include various types of touch panels arranged adjacent to the display panel.

Note that in the above-described embodiment, the display device according to the present invention is described as having a configuration in which the display device has a display panel in which a display unit is formed and a touch panel in which a touch panel unit that detects input information is formed, and the touch panel is arranged adjacent to the display face of the display panel. However, the display device of the present invention is not limited to such a case where the panel used as the display unit and the touch panel used as the touch panel unit are separate panels and are arranged adjacent to each other, but rather the display device of the present invention also encompasses a display device in which the display unit and the touch panel unit are formed in one panel, such as the case where a position detection element used as the touch panel unit is arranged inside a liquid crystal panel that is the display panel. Even in such a case of a display panel with a touch panel in which a position detection element such as a CCD is provided inside the display panel, the position signal detected by the position detection element is lead outside the display region via electrode wiring inside the display region in order to perform signal processing. Such electrode wiring used for leading out the position signal has a resistance component, and also has a parasitic capacitance with other electrode wiring used for image display inside the display region, and therefore noise is induced in the position detection signal when there is a change in the voltage level of the other electrode wiring used for display In such a case, applying the present invention enables suppressing the influence of noise in the position detection signal from the touch panel unit.

### Industrial Applicability

The present invention is industrially applicable as a display device that has a display unit for displaying an image and a touch panel unit for detecting a position of input from the outside, and enables an information input operation corresponding to a displayed image to be performed with use of the touch panel unit.

## Claims

1. A display device comprising:
a display unit having a plurality of electrodes for image display;
a display control unit that controls image display performed by the display unit by applying, to the plurality of electrodes of the display unit, electrode driving signals whose voltage levels change with a predetermined cycle;
a touch panel unit that detects an input position from the outside; and
a touch panel control unit that acquires a position detection signal by applying a scan signal to the touch panel unit,
wherein the touch panel control unit applies the scan signal three or more times in a cycle in which the voltage levels of the electrode driving signals change and compares the obtained position detection signals corresponding to the scan signals, determines position information indicated by two or more of the position detection signals that indicate the same result as being correct position information, and outputs the determined position information as a position signal.

2. The display device according to claim 1,
wherein the display control unit causes timings of change in the voltage levels of the electrode driving signals applied to the plurality of electrodes of the display unit to be the same timing.

3. The display device according to claim 1 or 2,
wherein the display device has a display panel in which the display unit that performs image display is formed, and a touch panel in which the touch panel unit that detects input information is formed, and
the touch panel is arranged adjacent to a display face of the display panel.

4. The display device according to any one of claims 1 to 3,
wherein the display unit is a liquid crystal panel in which a liquid crystal layer is sandwiched between two opposing substrates.
